# EUROPEAN PATENT APPLICATION

(11) **EP 2 767 887 A1**
(43) Date of publication of application: **20.08.2014**
(21) Application number: 14155491.5
(22) Date of filing: 18.02.2014
(51) Int. Cl.: G06F 3/01, G06F 3/0486, G06F 3/0488

(54) **Electronic device, method of operating the same, and computer-readable medium including a program**

(30) Priority: 18.02.2013 KR 20130017123
(71) Applicant: Samsung Display Co., Ltd., Gyeonggi-Do (KR)
(72) Inventor: Lee, Hyun-Jae, Seoul (KR); Kim, Mu-Gyeom, Yongin-City, Gyeonggi-Do (KR)
(74) Representative: Gulde & Partner

(57) **Abstract**

An electronic device includes a processor and a touchscreen. The processor is configured to execute an application program. The touchscreen is configured to display, in response to a first user input, a display region corresponding to the application program being executed and a command region transparently overlapped on a portion of the display region, the display region including a command execution object. The processor is further configured to execute a command operation assigned to the command region for the command execution object in response to a second user input moving the command execution object to the command region.

## Description

### BACKGROUND

### 1. Field of the Invention

Exemplary embodiments relate to an electronic device, and, more particularly, to an electronic device including a touchscreen, a method of operating the electronic device, and a computer-readable medium including a program.

### 2. Discussion of Related Art

Electronic devices (e.g., cellular phones, smart phones, smart pads, tablets, laptops, computers, televisions, etc.) including a touchscreen are ubiquitous. In this manner, various different forms of user interfaces exist. Generally speaking, when a user interacts with an electronic device including a touchscreen, the user learns how to access and utilize the features and functions of an associated user interface of the electronic device. For instance, the user may learn a method of handling the touchscreen, a method of performing commands on the electronic device, and the like. As the number of electronic devices and manufacturers of such electronic devices grows, the task of learning how to interact with the various user interfaces offered by the manufacturers may become increasingly more arduous for users. Therefore, it may prove beneficial to provide users with more universal user interfaces that may be applied across a number of different electronic devices including touchscreens.

The above information disclosed in this Background section is only for enhancement of understanding of the background of the inventive concept, and, therefore, it may contain information that does not form the prior art that is already known to a person of ordinary skill in the art.

### SUMMARY

Exemplary embodiments provide an electronic device including a simple, convenient user interface that may be incorporated across a number of different electronic devices including a touchscreen.

Exemplary embodiments provide a method of operating the electronic device.

Exemplary embodiments provide a computer-readable medium including at least one program for executing a simple, convenient user interface that may be incorporated across a number of different electronic devices including a touchscreen.

Additional aspects will be set forth in the detailed description which follows, and, in part, will be apparent from the disclosure, or may be learned by practice of the inventive concept.

According to exemplary embodiments, an electronic device includes a processor and a touchscreen. The processor is configured to execute an application program. The touchscreen is configured to display, in response to a first user input, a display region corresponding to the application program being executed and a command region transparently overlapped on a portion of the display region, the display region includes a command execution object. The processor is further configured to execute a command operation assigned to the command region for the command execution object in response to a second user input moving the command execution object to the command region.

According to exemplary embodiments, a method includes: causing, at least in part, a display region associated with an application program to be displayed, the display region comprising a command execution object associated with the application program; receiving a first user input; causing, at least in part, a command region to be transparently overlapped on a portion of the display region in response to receiving the first user input; receiving a second user input; causing, at least in part, the command execution object to be displayed in the command region in response to receiving the second user input; and performing a command operation assigned to the command region for the command execution object.

According to exemplary embodiments, a non-transitory computer-readable medium including instructions that, when executed, cause an apparatus at least to: execute an application program; display a display region associated with the application program, the display region comprising a command execution object associated with the application program; receive a first user input; transparently overlap a command region on the display region in response to reception of the first user input; receive a second user input; display the command execution object in the command region in response to reception of the second user input; and perform a command operation assigned to the command region for the command execution object.

According to exemplary embodiments, an electronic device, a method of operating an electronic device, and a non-transitory computer-readable medium including a program may provide users with a simple, convenient user interface that may be used across a number of different electronic devices including respective touchscreens by overlapping a plurality of command regions on a display region in response to a first user's input, and by performing a command operation assigned to a specific command region for a command execution object when the command execution object displayed on the display region is moved to the specific command region in response to a second user's input.

The foregoing general description and the following detailed description are exemplary and explanatory and are intended to provide further explanation of the claimed subject matter.

### BRIEF DESCRIPTION OF THE DRAWINGS

The accompanying drawings, which are included to provide a further understanding of the inventive concept, and are incorporated in and constitute a part of this specification, illustrate exemplary embodiments of the inventive concept, and, together with the description, serve to explain principles of the inventive concept.
FIG. 1 is a perspective view of an electronic device, according to exemplary embodiments.
FIG. 2 is a block diagram of the electronic device of FIG. 1, according to exemplary embodiments.
FIG. 3A is a plan view of the electronic device of FIG. 1, according to exemplary embodiments.
FIG. 3B is a plan view of the electronic device of FIG. 1 including a plurality of command regions displayed on a touchscreen of the electronic device, according to exemplary embodiments.
FIG. 4 depicts an illustrative first user input to the electronic device of FIG. 1, according to exemplary embodiments.
FIG. 5 depicts an illustrative second user input to the electronic device of FIG. 1, according to exemplary embodiments.
FIG. 6 is a flowchart of a method of operating an electronic device, according to exemplary embodiments.
FIG. 7 is a flowchart of a method to change a command operation assigned to a command region based on the number of times the command region is used in association with the method of FIG. 6, according to exemplary embodiments.
FIG. 8 is a flowchart of a method to adjust an area of a command region based on the number of times the command region is used in association with the method of FIG. 6, according to exemplary embodiments.
FIG. 9A depicts an illustrative user interface executing a setting-change application program based on the method of FIG. 6, according to exemplary embodiments.
FIG. 9B depicts an illustrative user interface executing a message-sending application program based on the method of FIG. 6, according to exemplary embodiments.
FIG. 9C depicts an illustrative user interface executing a document-drafting application program based on the method of FIG. 6, according to exemplary embodiments.
FIG. 10 is a block diagram of a computer-readable medium including at least one program, according to exemplary embodiments.

### DETAILED DESCRIPTION OF THE ILLUSTRATED EMBODIMENTS

In the following description, for the purposes of explanation, numerous specific details are set forth in order to provide a thorough understanding of various exemplary embodiments. It is apparent, however, that various exemplary embodiments may be practiced without these specific details or with one or more equivalent arrangements. In other instances, well-known structures and devices are shown in block diagram form in order to avoid unnecessarily obscuring various exemplary embodiments.

In the accompanying figures, the size and relative sizes of layers, films, panels, regions, etc., may be exaggerated for clarity and descriptive purposes. Also, like reference numerals denote like elements.

When an element or layer is referred to as being "on," "connected to," or "coupled to" another element or layer, it may be directly on, connected to, or coupled to the other element or layer or intervening elements or layers may be present. When, however, an element or layer is referred to as being "directly on," "directly connected to," or "directly coupled to" another element or layer, there are no intervening elements or layers present. For the purposes of this disclosure, "at least one of X, Y, and Z" and "at least one selected from the group consisting of X, Y, and Z" may be construed as X only, Y only, Z only, or any combination of two or more of X, Y, and Z, such as, for instance, XYZ, XYY, YZ, and ZZ. Like numbers refer to like elements throughout. As used herein, the term "and/or" includes any and all combinations of one or more of the associated listed items.

Although the terms first, second, etc. may be used herein to describe various elements, components, regions, layers, and/or sections, these elements, components, regions, layers, and/or sections should not be limited by these terms. These terms are used to distinguish one element, component, region, layer, and/or section from another element, component, region, layer, and/or section. Thus, a first element, component, region, layer, and/or section discussed below could be termed a second element, component, region, layer, and/or section without departing from the teachings of the present disclosure.

Spatially relative terms, such as "beneath," "below," "lower," "above," "upper," and the like, may be used herein for descriptive purposes, and, thereby, to describe one element or feature's relationship to another element(s) or feature(s) as illustrated in the drawings. Spatially relative terms are intended to encompass different orientations of an apparatus in use, operation, and/or manufacture in addition to the orientation depicted in the drawings. For example, if the apparatus in the drawings is turned over, elements described as "below" or "beneath" other elements or features would then be oriented "above" the other elements or features. Thus, the exemplary term "below" can encompass both an orientation of above and below. Furthermore, the apparatus may be otherwise oriented (e.g., rotated 90 degrees or at other orientations), and, as such, the spatially relative descriptors used herein interpreted accordingly.

The terminology used herein is for the purpose of describing particular embodiments and is not intended to be limiting. As used herein, the singular forms, "a," "an," and "the" are intended to include the plural forms as well, unless the context clearly indicates otherwise. Moreover, the terms "comprises," comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure is a part. Terms, such as those defined in commonly used dictionaries, should be interpreted as having a meaning that is consistent with their meaning in the context of the relevant art and will not be interpreted in an idealized or overly formal sense, unless expressly so defined herein.

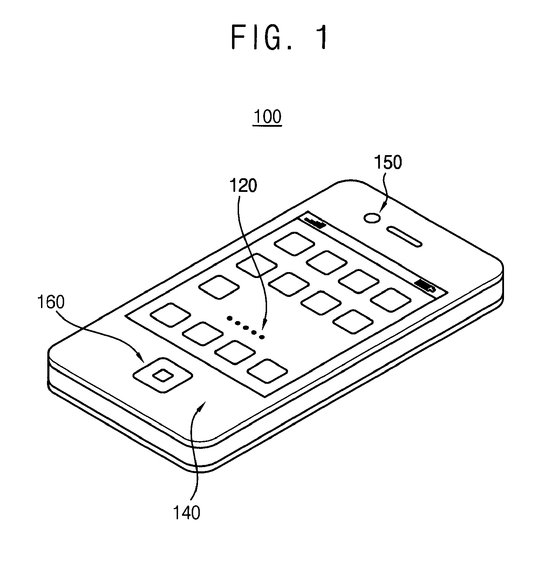

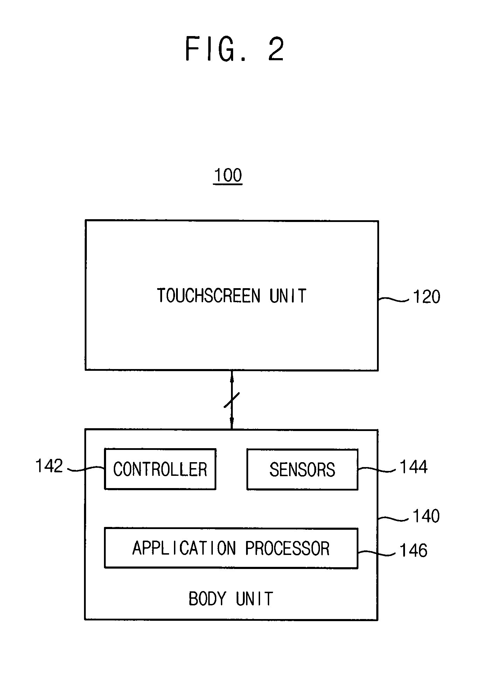

FIG. 1 is a perspective view of an electronic device, according to exemplary embodiments. FIG. 2 is a block diagram of the electronic device of FIG. 1.

Referring to FIGS. 1 and 2, the electronic device 100 may be implemented as a mobile phone (e.g., a smart phone) including a touchscreen 120 and a body unit 140. It is contemplated, however, that the electronic device 100 may be implemented as any other suitable electronic device, such as, for example, a cellular phone, a smart phone, a smart pad, a tablet, a personal digital assistant, a portable multimedia player, an MP3 player, a television, a computer monitor, a laptop, a tablet, a digital camera, a camcorder, a game console, a consumer appliance, an automobile, etc., including touchscreen 120. To this end, touchscreen 120 may be coupled to (or otherwise supported by or in) the body unit 140. The touchscreen 120 may include a display device and a touch sensor device.

According to exemplary embodiments, the touchscreen 120 includes a display region configured to present an application program being executed by (or in association with) the electronic device 100. In this manner, the display region includes a plurality of command regions transparently overlapped on portions of the display region in response to a first user input. For example, the touchscreen 120 displays the display region and then may transparently overlap (i.e., display) the command regions on the display region when the first user input is received as an input to the electronic device 100, e.g., an input to the controller 142 of the electronic device 100. In this manner, the command regions may be transparently overlapped on the display region, such that the display region may display an underlying presentation via the touchscreen 120 in a manner that preserves (e.g., does not reduce, remove, modify, etc.) the underlying display presentation, while at the same time, also presenting the command regions. As such, a user may observe an overlapped display region (e.g., a display region that is overlapped by the command regions) and a non-overlapped display region (e.g., a display region that is not overlapped by the command regions).

In exemplary embodiments, the first user input may correspond to an operation in which one portion of the display region is dragged while another portion of the display region is touched (which may also be referred to as a "point-and-drag" operation). It is also contemplated that the first user input may correspond to an operation in which a user gesture is captured by, for instance, a camera (e.g., camera 150) that may be included in the body unit 140 or otherwise associated with the electronic device 100. According to exemplary embodiments, the first user input may correspond to an operation in which the body unit 140 is manipulated, such as translated, rotated, shaken, jostled, tilted, etc. For example, the number of times the body unit 140 is shaken may be set by users, manufactures, etc., to correspond to a determined feature, function, operation, application, etc., associated with the electronic device 100. It is also contemplated that the first user input may correspond to an operation in which a command button (e.g., command button 160) included as part of (or associated with) the electronic device is pushed or otherwise manipulated (e.g., rotated, tilted, etc.) In this manner, exemplary embodiments may be implemented in association with any suitable form or type of "first user input" to the electronic device 100.

According to exemplary embodiments, the electronic device 100 performs a command operation assigned to a command region for a command execution object when, for instance, the command execution object displayed on the display region of the touchscreen 120 is moved to the command region in response to a second user input. It is noted that a plurality of command operations may be assigned to a plurality of command regions, respectively. The second user input may correspond to an operation in which a command execution object of the display region is dragged and dropped into a command region (which may also be referred to as a "drag-and-drop" operation). For example, a command operation assigned to a command region may be performed for a command execution object when a user drags and drops the command execution object displayed on a display region of the touchscreen 120 into the command region. It is contemplated, however, that the second user input may be any other form or type of user input to or interaction with the electronic device 100. In this manner, respective command operations for the command execution object (or, respective functions for the command execution object) may be assigned to respective command regions. As such, the electronic device 100 may provide a simple, convenient user interface that may be implemented across a number of different electronic devices, such as universally implemented by electronic devices.

In exemplary embodiments, a command operation assigned to a command region of the touchscreen 120 may be changed (or otherwise modified) based on the number of times or frequency at which the command region is used. For example, assuming that a "copy" operation is assigned to a command region, a "delete" operation may be reassigned to the command region when the command region is not frequently used - that is, when the "copy" operation associated with the common region is not frequently performed. It is also contemplated that an area of a command region of the touchscreen 120 may be adjusted (or otherwise modified), such as, for instance, increased or decreased in size, based on the number of times or frequency at which the command region is used. For example, an area of a command region may be increased when the number of times the command region is used is relatively large, e.g., the number of times the command region is used is relatively larger than the number of times one or more other command regions presented via the touchscreen 120 are used or the number of times the command region is used in a determined time period increases to a threshold value. On the other hand, an area of a command region may be decreased when the number of times the command region is used is relatively small, e.g., the number of times the command region is used is relatively smaller than the number of times one or more other command regions presented via the touchscreen 120 are used or the number of times the command region is used in a determined time period decreases to a threshold value. Here, the threshold value may be determined according to the number of use of the electronic device of a user or fixed to a particular number such as 500, 1000 and so on. As such, command regions that are more frequently used (e.g., a command operation that is frequently performed) may be easily identified and executed.

According to exemplary embodiments, one or more aspects (e.g., size, shape, spatial position, color, etc.) of a command execution object may be modified based on the number of times or frequency of use of the command execution objection. For example, as the frequency of use of a command execution objection increases (or decreases), the size of the command execution object may correspondingly increase (or decrease), the color of the command execution object may become brighter (or dimmer), the spatial position of the command executed object may become more readily (or less readily) accessible.

In exemplary embodiments, execution of any given command execution object may be based on "dragging and dropping" a command execution objection into one of a plurality of displayed command regions presented via the touchscreen 120. As such, a user may "drag and drop" command execution objects in a first command region more (or less) than in a second command region. In this manner, one or more aspects (e.g., size, shape, spatial position, color, etc.) of the first command region may be modified relative to the second command region based on the frequency at which command execution objects are "dragged and dropped" into the first command region versus the second command region. It is also contemplated that such modifications to the command regions may be relative to one or more threshold values.

As seen in FIG. 1, the touchscreen 120 may be attached to the body unit 140 or otherwise supported therein or thereby. Since the touchscreen 120 may include the display device and the touch sensor device, the body unit 140 may include at least one controller 142 (e.g., a display controller, a touch sensor controller, etc.). In this manner, the controller 142 may control a display function and a touch sensor function of the touchscreen 120. The body unit 140 may also include an application processor 146 and a plurality of sensors 144. The sensors 144 may perform various sensing operations of the electronic device 100. For example, the sensors 144 may include a gyroscopic sensor configured to measure (or otherwise determine) a rotating angular speed, an acceleration sensor configured to measure a speed and a momentum, a geomagnetic field sensor configured to serve as a compass, a barometer sensor configured to measures an altitude, a grip sensor configured to determine whether the electronic device 100 is gripped (or otherwise held) by a user, a gesture-proximity-illumination sensor configured to performs various operations, such as motion recognition, proximity detection, illumination measurement, etc., a temperature-humidity sensor configured to measure a temperature and a humidity, and/or the like. In this manner, exemplary embodiments may be implemented in association with any suitable kind or type of sensor 144. The application processor 146 may perform various computing functions to, for instance, control an overall operation of the electronic device 100. For example, the application processor 146 may be implemented via one or more general purpose and/or special purpose components, such as one or more discrete circuits, digital signal processing chips, integrated circuits, application specific integrated circuits, microprocessors, processors, programmable arrays, field programmable arrays, instruction set processors, and/or the like.

Although not illustrated, the body unit 140 may further include a memory device, a storage device, a plurality of function devices, etc. The memory device may be configured to store data for operations of the electronic device 100. For example, the memory device may include a volatile semiconductor memory device, such as, for instance, a dynamic random access memory (DRAM) device, a static random access memory (SRAM) device, a mobile DRAM device, etc., and/or a non-volatile semiconductor memory device, such as, for instance, an erasable programmable read-only memory (EPROM) device, an electrically erasable programmable read-only memory (EEPROM) device, a flash memory device, a phase change random access memory (PRAM) device, a resistance random access memory (RRAM) device, a nano floating gate memory (NFGM) device, a polymer random access memory (PoRAM) device, a magnetic random access memory (MRAM) device, a ferroelectric random access memory (FRAM) device, etc. The storage device may include a solid state drive (SSD) device, a hard disk drive (HDD) device, a compact disc-read only memory (CD-ROM) device, a rewriteable compact disc (CD-RW) device, a digital video disc (DVD) device, a rewriteable DVD (DVD-RW), etc. The function devices may perform various operations of the electronic device 100. For example, the function devices may include a camera device configured to provide a camera function, a communication device configured to provide a communication function (e.g., a code division multiple access (CDMA) module, a long term evolution (LTE) module, a radio frequency (RF) module, an ultra-wideband (UWB) module, a wireless local area network (WLAN) module, a worldwide interoperability for microwave access (WiMAX) module, etc.), a global positioning system (GPS) device (and/or any other suitable location determination module), a microphone (MIC) device, a speaker device, etc. It is contemplated, however, that the electronic device 100 may include any suitable kind, type, and/or number of function devices.

According to exemplary embodiments, the electronic device 100 may provide a user with a simple, convenient user interface that may be implemented on a number of electronic devices including a touchscreen. The user interface may overlap a plurality of command regions on a display region in response to a first user input, and perform respective command operations assigned to respective command regions for a command execution object when the command execution object displayed on the display region is moved to respective command regions in response to a second user input. In this manner, a user does not need to learn various different user interfaces to use respective electronic devices (e.g., a smart phone, a smart pad, a computer, a tablet, etc.), which may be manufactured by various different manufacturers. It is also noted that the electronic device 100 may provide the simple, convenient user interface without any additional hardware device. Although exemplary embodiments have been described in association with the first user input and the second user input being sequentially input, the first user input and the second user input may be input at the same time.

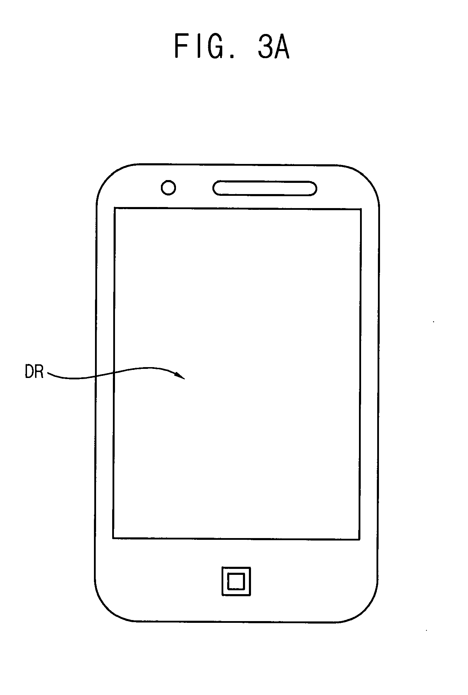

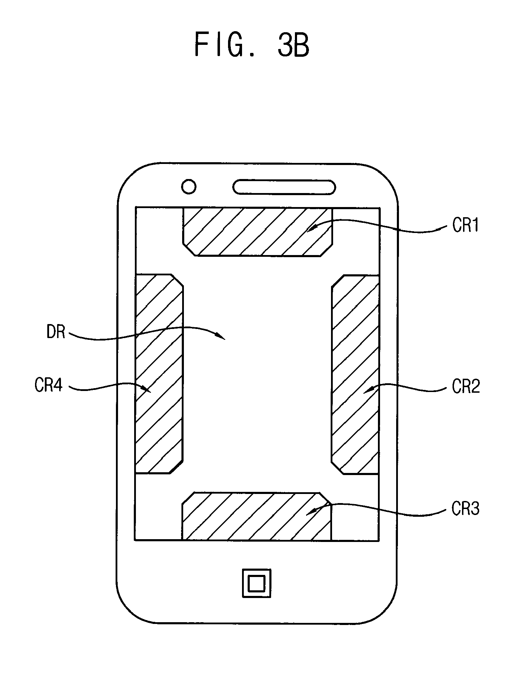

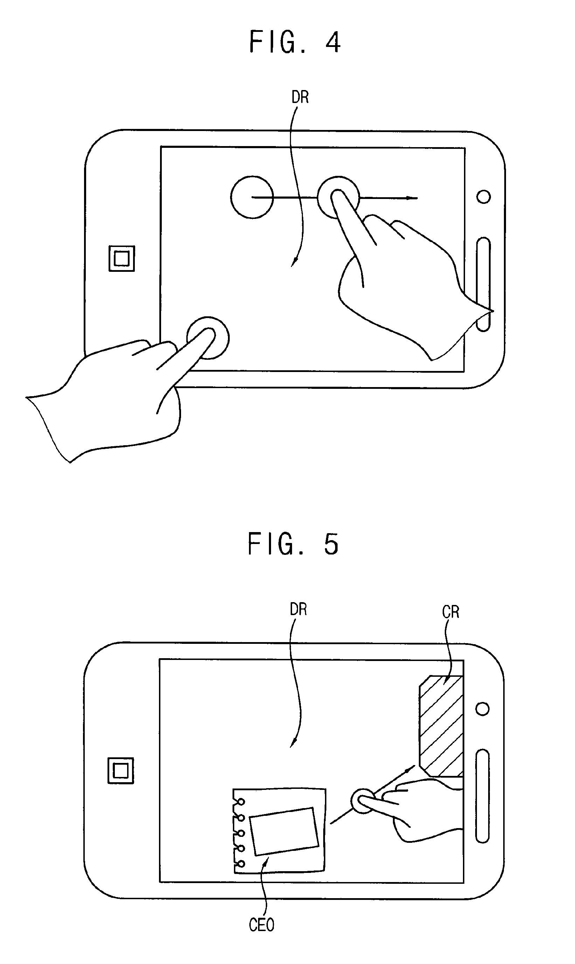

FIGS. 3A is a plan view of the electronic device of FIG. 1, according to exemplary embodiments. FIG. 3B is a plan view of the electronic device of FIG. 1 including a plurality of command regions displayed on a touchscreen of the electronic device, according to exemplary embodiments. FIG. 4 depicts an illustrative first user input to the electronic device of FIG. 1, according to exemplary embodiments.

Referring to FIGS. 3A, 3B and 4, the touchscreen 120 may present (e.g., display) a display region DR and one or more command regions, such as, for example, command regions CR1, CR2, CR3, and CR4. As illustrated in FIG. 3A, the touchscreen 120 may display the display region DR in which an application program may be executed. For instance, as illustrated in FIG. 4, a first user input may be input to the electronic device 100 via a touch-based interaction, e.g., the first user input may correspond to an operation in which one portion of the display region DR is dragged while another portion of the display region DR is touched, e.g., a "point and drag" input. In response to receiving the first user input, the touchscreen 120 may transparently overlap (e.g., transparently display) the command regions CR1, CR2, CR3, and CR4 on the display region DR, as seen in FIG. 3. As another example, the first user input may be input to the electronic device 100 via camera-captured gesture, e.g., the first user input may correspond to an operation in which a determined user gesture is captured by the camera 150. In response to receiving the first user input, the touchscreen 120 may transparently overlap the command regions CR1, CR2, CR3, and CR4 on the display region DR, as seen in FIG. 3. It is also contemplated that the first user input may be input to the electronic device 100 based on a manipulation (e.g., patterned motion, shaking action, tiling action, etc.) of the electronic device 100, e.g., the first user input may correspond to an operation in which the body unit 140 is shaken several times. In response to detecting the manipulation of the electronic device 100, the touchscreen 120 may transparently overlap the command regions CR1, CR2, CR3, and CR4 on the display region DR, as seen in FIG. 3. Further, the first user input may be input to the electronic device via a physical button interaction, e.g., the first user input may correspond to an operation in which a command button is pushed. In response to the command button push, the touchscreen 120 may transparently overlap the command regions CR1, CR2, CR3, and CR4 on the display region DR, as seen in FIG. 3. As such, a user can observe an overlapped display region DR (e.g., one or more portions of the display region DR overlapped by one or more command regions CR1, CR2, CR3, and CR4), as well as a non-overlapped display region DR (e.g., one or more portions of the display region DR that are not overlapped by the one or more command regions CR1, CR2, CR3, and CR4). To this end, the user may perform respective command operations assigned to respective command regions CR1, CR2, CR3, and CR4 in association with a command execution object by moving the command execution object displayed on the display region DR to a respective command region CR1, CR2, CR3, or CR4. Although the first user input has been described above in association with particular illustrative examples, it is contemplated that any suitable first user input may be utilized in association with exemplary embodiments described herein.

FIG. 5 depicts an illustrative second user input to the electronic device of FIG. 1, according to exemplary embodiments.

Referring to FIG. 5, a command operation may be performed in association with a command execution object CEO displayed via the touchscreen 120 of the electronic device 100. That is, the electronic device 100 may perform a command operation assigned to a command region CR for the command execution object CEO when the command execution object CEO of the display region DR is moved to the command region CR in response to the second user input (e.g., a "drag-and-drop" operation) while the display region DR on which an application program is executed and the command region CR, which transparently overlaps the display region DR, are displayed on the touchscreen 120. In other words, when the command execution object CEO is moved from the display region DR to the command region CR, the command operation assigned to the command region CR may be performed (or otherwise executed) for the command execution object CEO. Although the second user input has been described in association with an illustrative example, it is contemplated that any suitable second user input may be utilized in association with exemplary embodiments.

According to exemplary embodiments, the command operation assigned to the command region CR may be changed (e.g., reassigned) based on the number of times the command region CR is used on the touchscreen 120. For instance, an area of the command region CR may be increased or decreased based on the number of times the command region CR is used on the touchscreen 120, which may be in relation to one or more other command regions CR and/or one or more threshold values. As a result, the command region CR that is frequently used (e.g., the command operation that is frequently performed) may be more easily identified. In this manner, the electronic device 100 of FIG. 1 may provide a user with a simple, convenient user interface that may be widely across various electronic devices 100 including respective touchscreens 120. This may be achieved by overlapping at least one command region CR on the display region DR in response to a first user input and performing a command operation assigned to the command region CR for a command execution object CEO when the command execution object CEO displayed on the display region DR is moved to the command region CR in response to a second user input.

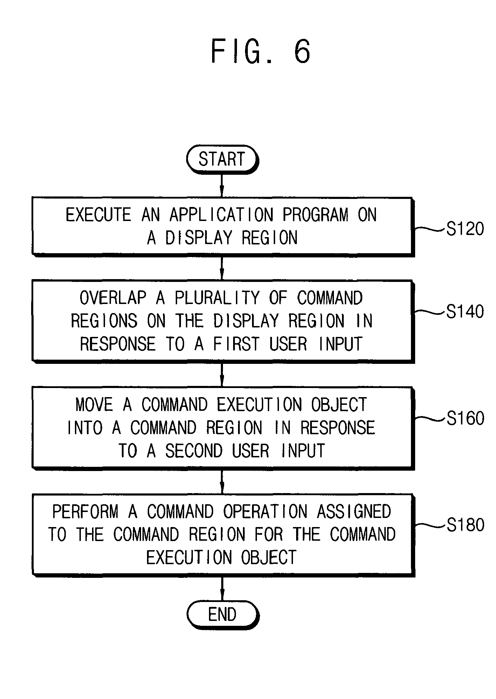

FIG. 6 is a flowchart of a method of operating an electronic device, according to exemplary embodiments. For descriptive convenience, the method of FIG. 6 is described in association with the electronic device 100 of FIGS. 1, 2, and 5.

Referring to FIG. 6, an application program may be executed on a display region DR of the touchscreen 120 of the electronic device 100 (S120). For instance, the application program may be an application program provided as part of an operating system (OS) of the electronic device 100, provided independently of the OS, etc. In exemplary embodiments, the controller 142 may overlap at least one command region on the display region DR in response to detecting (or otherwise receiving) a first user input (S140) when the first user input is input by a user to the electronic device 100. For example, the first user input may correspond to an operation in which one portion of the display region is dragged while another portion of the display region is touched. It is also contemplated that the first user input may correspond to an operation in which a determined user gesture is captured by a camera of the electronic device 100. The first user input may correspond to an operation in which the body unit of the electronic device is shaken (or otherwise manipulated) in a determined manner. For example, the number of times the body unit of the electronic device is shaken may be set by users, manufactures, etc., and, thereby, associated with determined commands, features, operations, etc. It is also contemplated that the first user input may correspond to an operation in which a command button of the electronic device 100 is interacted with, e.g., pushed, rotated, etc. In other words, the first user input may be any suitable type of interaction to provide an input to the electronic device 100. When, for example, a subsequent or contemporaneous second user input is input to or detected by the electronic device 100, the second user input may cause a command execution object CEO to be moved to a command region CR (S160). In this manner, a command operation assigned to the command region CR may be performed for the command execution object CEO (S 180). For example, the second user input may correspond to an operation in which the command execution object CEO of the display region DR is dragged and dropped into the command region CR. It is contemplated, however, that any other suitable second user input may be utilized in association with exemplary embodiments.

According to exemplary embodiments, the command operation assigned to the command region CR in S140 may be changed (e.g., reassigned) based on the number of times the command region CR is used. For example, a first operation (e.g., a copy-operation) may be assigned to a command region CR, however, a second operation (e.g., a delete-operation) may be reassigned to the command region CR when the command region CR is not frequently used, or, in other words, the first operation associated with the command region CR is not frequently performed. It is also contemplated that, in association with S 140, an area of the command region CR may be adjusted (e.g., increased or decreased) based on the number of times the command region CR is used, which may be in relation to one or more other command regions CR, based on one or more threshold values, etc. For example, the area of the command region CR may be increased when the number of times the command region CR is used is relatively large, and may decrease an area of the command region CR when the number of times the command region CR is used is relatively small. In this manner, the command region CR that is frequently used (or the command operation that is frequently performed) may be easily identified and accessed.

For example, the application program executed in association with S120 may correspond to a setting-change application program for changing settings of the electronic device 100. As such, the command execution object CEO may correspond to a setting-change object of the setting-change application program. Setting information may be assigned to the command region CR, such that a particular setting may be modified based on the dragging and dropping of the setting-change object into the command region CR. As another example, the application program executed in association with S120 may correspond to a message-sending application program. As such, the command execution object CEO may correspond to a message drafting object. An addressee to be assigned to a message may be assigned to the command region CR, such that the addressee may be added to a draft message based on dragging and dropping the message drafting object into the command region CR. For instance, the application program executed in association with S120 may correspond to a document-drafting application program. As such, the command execution object CEO may correspond to a word, a phrase, or a sentence of a document. In this manner, an editor command may be assigned to the command region CR, such that when the word, phrase, or sentence object is dragged and dropped into the command region CR the word, phrase, or sentence may be edited or, for example, spell-checked. As yet another example, the electronic device 100 may relate to a consumer appliance, such as, for instance, a washing machine with a touchscreen 120 for inputting commands to the washing machine. In this manner, the application program executed in association with S120 may correspond to a washing cycle application program. The command execution object CEO may correspond to a type of washing cycle (e.g., a normal washing cycle, a quick washing cycle, an energy-saving washing cycle, etc.). To this end, a start washing cycle command may be assigned to the command region CR, such that when the type of washing cycle is dragged and dropped into the command region CR, the type of washing cycle may be initiated, paused, modified, etc.

Accordingly, it is contemplated that the kind of the application program may be any suitable application program that may be executed in association with the electronic device 100 upon which the application program is executed. To this end, the command execution object CEO and the command region CR may be set in association with any suitable feature, function, operation, etc., of the application program. In this manner, the user interface may be applied across a number of electronic devices, such that users of the electronic devices may simply learn the various aspects of a universal user interface versus the device/manufacturer-specific aspects of different user interfaces for different electronic devices.

In exemplary embodiments, the user interface may be provided to a user, such as provided to a user on a computer-readable medium for installation on their various electronic devices 100 including respective touchscreens 120. In this manner, users may universalize the manner in which the features and functions of their various electronic devices 100 are accessed and utilized.

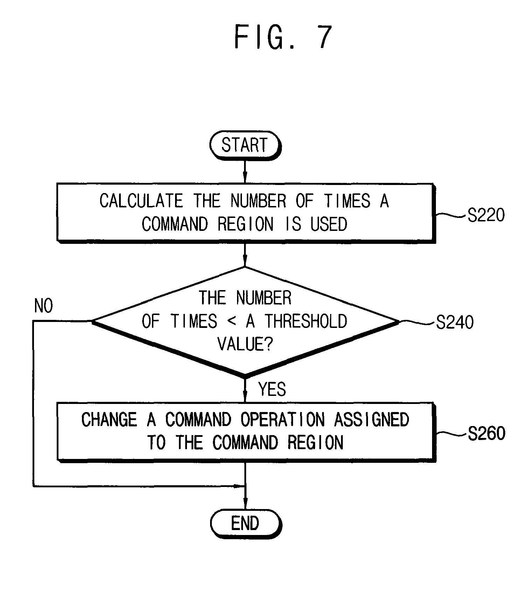

FIG. 7 is a flowchart of a method to change a command operation assigned to a command region based on the number of times the command region is used in association with the method of FIG. 6, according to exemplary embodiments. For descriptive convenience, the method of FIG. 7 is described in association with the electronic device 100 of FIGS. 1, 2, and 5.

Referring to FIG. 7, a command operation assigned to a command region may be changed (e.g., reassigned) when the number of times the command region is used is smaller than a threshold value (e.g., determined number of times used). That is, the controller 142 and/or application processor 146 of the electronic device 100 may calculate (or otherwise determine) the number of times a command region CR has been used (S220), such as the number of times the command region CR has been used over a time period. In this manner, the number of times the command region CR has been used may be compared to a threshold value (S240). If the number of times is less than the threshold value, a command operation CR assigned to the command region CR may be changed (S260). On the other hand, the command operation assigned to the command region CR may be maintained when the number of times the command region CR is used is greater than or equal to the threshold value.

For example, a first command operation (e.g., a copy-operation) may be assigned to a command region CR. The controller 142, the application processor 146, and/or any other suitable component of the electronic device 100 may determine the number of times the first command operation has been used, such as the number of times the first command operation has been used in a time period (S220). The number of times the first command operation has been used may be compared to a threshold value (S240). A second command operation (e.g., a delete-operation) may be assigned to the command region CR when the number of times the command region CR is used is smaller than the threshold value (S260), e.g., the first command operation may not be frequently performed.

According to exemplary embodiments, the process of FIG. 7 provides users with a convenient user interface adapted to their idiosyncrasies and behavioral patterns of accessing one or more features and/or functions of an application program. In other words, the plurality of command regions CR overlapping the display region DR may be associated with frequently used command operations (e.g., command operations more frequently performed) on the display region DR. As such, the features and/or functions that a user more readily accesses may be provided in a more convenient, easily accessible manner.

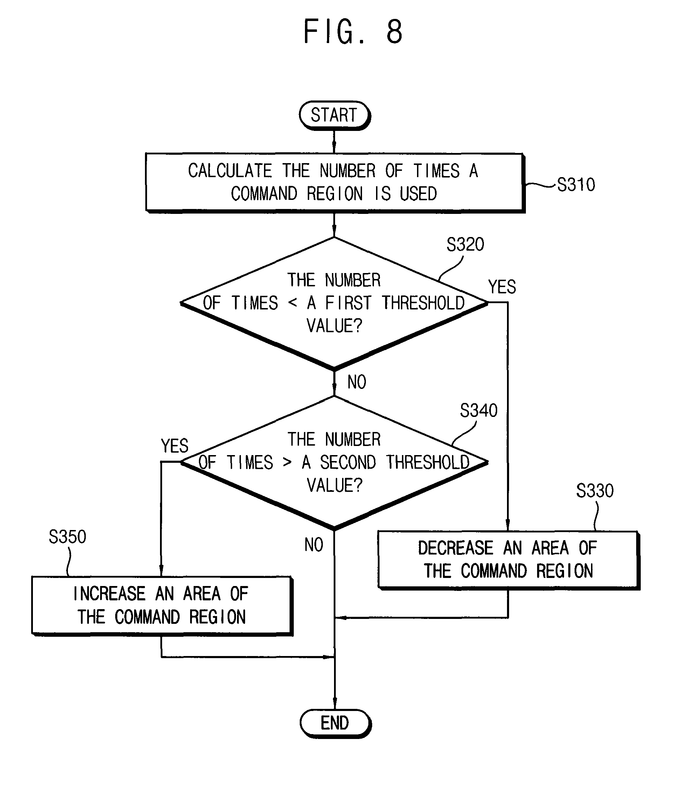

FIG. 8 is a flowchart of a method to adjust an area of a command region based on the number of times the command region is used in association with the method of FIG. 6, according to exemplary embodiments. For descriptive convenience, the method of FIG. 7 is described in association with the electronic device 100 of FIGS. 1, 2, and 5.

Referring to FIG. 8, an area of a command region CR may be decreased when the number of times the command region CR is used is smaller than a first threshold value and increased when the number of times the command region CR is used is greater than a second threshold value. That is, the electronic device 100 (e.g., the controller 142, the application processor 146, or any other suitable component) may calculate the number of times the command region CR is used (S310), such as the number of times the command region CR is used in a time period. The number of times the command region CR is used may be compared against a first threshold value (S320). When the number of times the command region is used is smaller than the first threshold value, the area of the command region may be decreased (S330).

When the number of times the command region CR is used is greater than or equal to the first threshold value, the number of times the command region CR is used may be compared against a second threshold value (S340). When the number of times the command region CR is used is greater the second threshold value, the area of the command region CR may be increased (S350). When the number of times the command region CR is used is smaller than the second threshold value, the area of the command region CR may not be adjusted (e.g., not increased or decreased).

According to exemplary embodiments, the process of FIG. 8 provides users with a convenient user interface adapted to their idiosyncrasies and behavioral patterns of accessing one or more features and/or functions of an application program. In other words, a command region CR that is frequently used (e.g., a command operation that is frequently performed and associated with the command region CR) may be more easily identified and more readily accessible by adaptively increasing areas of corresponding command regions CR that are frequently used (e.g., command operations that are frequently performed) and adaptively decreasing areas of command regions CR that are infrequently used (e.g., command operations that are infrequently performed).

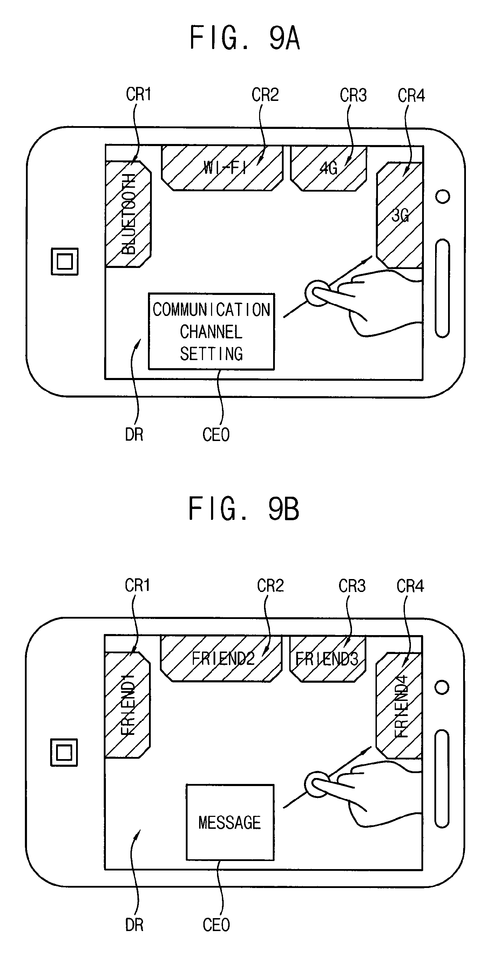

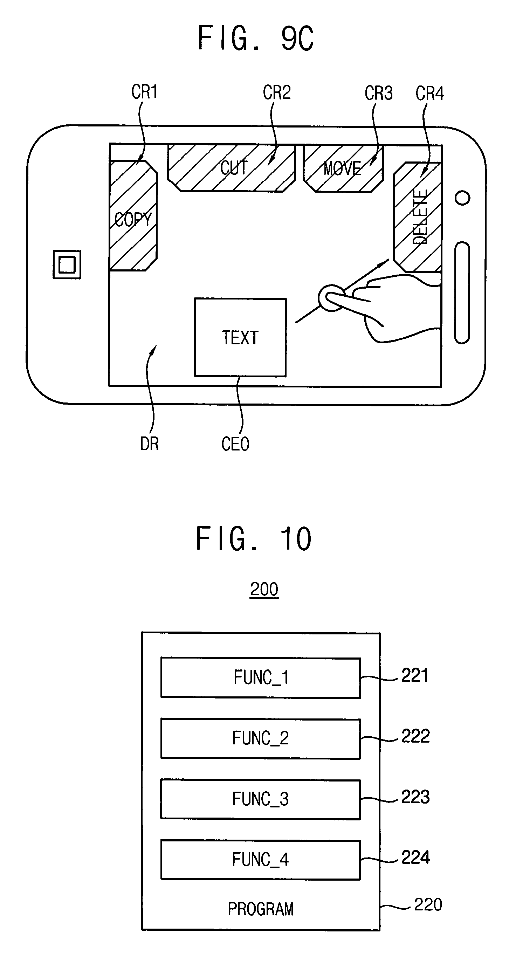

FIG. 9A depicts an illustrative user interface executing a setting-change application program, according to exemplary embodiments. FIG. 9B depicts an illustrative user interface executing a message-sending application program, according to exemplary embodiments. FIG. 9C depicts an illustrative user interface executing a document-drafting application program, according to exemplary embodiments.

Referring to FIGS. 9A through 9C, various application programs may be executed in association with the method of FIG. 6. As illustrated in FIGS. 9A through 9C, a display region DR in which an application program is executed and first through fourth command regions CR1, CR2, CR3, and CR4 transparently overlapping the display region DR are displayed together in response to, for example, the electronic device 100 receiving or otherwise detecting a first user input.

Adverting to FIG. 9A, the electronic device 100 is shown executing a setting-change application program, which may be utilized to change one or more settings of the electronic device 100. A command execution object CEO may correspond to a setting-change object of the setting-change application program (e.g., indicated as COMMUNICATION CHANNEL SETTING). In addition, setting information (e.g., indicated as BLUETOOTH, WI-FI, 4G, and 3G) may be assigned to the first through fourth command regions CR1, CR2, CR3, and CR4, respectively. The setting information may include a communication setting information, a display setting information, etc. For example, a BLUETOOTH setting operation may be assigned to the first command region CR1, a WI-FI setting operation may be assigned to the second command region CR2, a 4G-communication setting operation may be assigned to the third command region CR3, and a 3G-communication setting operation may be assigned to the fourth command region CR4. In this manner, when the command execution object CEO is moved to one of the first through fourth command regions CR1, CR2, CR3, and CR4 in response to a second user input (e.g., a drag-and-drop operation), the communication setting operation assigned to the one of the first through fourth command regions CR1, CR2, CR3, and CR4 may be performed.

As illustrated in FIG. 9B, the electronic device 100 is shown executing a message-sending application program, which may be utilized to, for instance, transmit a text message, multimedia message, wireless application protocol message, electronic mail message, etc. The command execution object CEO may correspond to a message or a message drafting feature (e.g., indicated as MESSAGE). An addressee of the message (e.g., indicated as FRIEND1, FRIEND2, FRIEND3, and FRIEND4) may be assigned to the first through fourth command regions CR1, CR2, CR3, and CR4, respectively. For example, a first addressee FRIEND1 may be assigned to the first command region CR1, a second addressee FRIEND2 may be assigned to the second command region CR2, a third addressee FRIEND3 may be assigned to the third command region CR3, and a fourth addressee FRIEND4 may be assigned to the fourth command region CR4. When the command execution object CEO is moved to one of the first through fourth command regions CR1, CR2, CR3, and CR4 in response to a second user input, the message may be sent to an addressee assigned to the one of the first through fourth command regions CR1, CR2, CR3, and CR4. For example, when the command execution object CEO is moved to a command region to which all addressees are assigned, the message may be sent to all addressees included in an address book (e.g., a phone directory) of the electronic device 100. It is also contemplated that moving the command execution object CEO to a command region may execute a message drafting feature with the addressee associated with the command region populated as the addressee of the message. In this manner, users may be provided an opportunity to edit the message before it is transmitted to the addressee(s).

Referring to FIG. 9C, the electronic device 100 is shown executing a document-drafting application program. The command execution object CEO may correspond to a word, a phrase, or a sentence for a document (e.g., as indicated as TEXT). An editor command (e.g., as indicated as COPY, CUT, MOVE, and DELETE) may be assigned to the first through fourth command regions CR1, CR2, CR3, and CR4, respectively. For example, a copy-operation COPY may be assigned to the first command region CR1, a cut-operation CUT may be assigned to the second command region CR2, a move-operation MOVE may be assigned to the third command region CR3, and a delete-operation DELETE may be assigned to the fourth command region CR4. When the command execution object CEO is moved to one of the first through fourth command regions CR1, CR2, CR3, and CR4 in response to a second user input, the editor command assigned to the one of the first through fourth command regions CR1, CR2, CR3, and CR4 may be performed.

According to exemplary embodiments, one or more command regions (e.g., command regions CR1, CR2, CR3, and CR4) may be transparently overlapped on a display region DR. In this manner, an electronic device 100 may perform a command operation assigned to one of the first through fourth command regions CR1, CR2, CR3, and CR4 for a command execution object CEO when the command execution object CEO is moved to one of the command regions CR. In this manner, a user does not need to learn different user interfaces to use respective electronic devices 100, which may be manufactured by different manufacturers, and, therefore, would otherwise provide different user interfaces.

Although FIGS. 9A through 9C are illustrated with a smart-phone implementation of the electronic device 100, it is contemplated that any suitable electronic device including a touchscreen 120 may be utilized in association with exemplary embodiments. For example, the electronic device may be implemented as a cellular phone, a smart pad, a tablet, a personal digital assistant, a portable multimedia player, an MP3 player, a television, a computer monitor, a laptop, a tablet, a digital camera, a camcorder, a game console, a consumer appliance, an automobile, etc. To this end, any suitable application program may be implemented in association with exemplary embodiments other than the illustrative setting-change application program, message-sending application program, and document-drafting application program described herein. For example, the application program may include any suitable application program that may be executed in the electronic device (e.g., a phone-call application program, a messenger application program, an internet application program (e.g., web-browser), a calendar application program, a camera application program, a camcorder application program, a game application program, etc.).

FIG. 10 is a block diagram of a computer-readable medium including at least one program, according to exemplary embodiments.

Referring to FIG. 10, a computer-readable medium 200 may include (e.g., store) a program 200. The program 200 may implement a function 221 of executing an application program on a display region DR of an electronic device 100 including a touchscreen 120, a function 222 of transparently overlapping at least one command region CR on the display region DR in response to a first user input, a function 223 of moving a command execution object CEO to the command region CR in response to a second user input, and a function 224 of performing a command operation assigned to the command region CR for the command execution object CEO, as well as any other suitable function for carrying out exemplary embodiments described herein.

According to exemplary embodiments, the first user input may correspond to an operation in which one portion of the display region DR is dragged while another portion of the display region DR is touched, an operation in which a user gesture is captured by a camera 150 associated with the electronic device 100, an operation in which the electronic device 100 is manipulated (e.g., shaken, rotated, jostled, etc.) in a determined manner, an operation in which a command button 160 of the electronic device 100 is pushed, etc. It is contemplated, however, that the first user input is not limited thereto, but may be any suitable first user input to or detected by the electronic device 100. The second user input may correspond to an operation in which the command execution object CEO of the display region DR is dragged and dropped into the command region CR. It is contemplated, however, that the second user input is not limited thereto, but may be any suitable second user input to or detected by the electronic device 100.

In exemplary embodiments, the computer-readable medium 200 including the program 200 may transparently overlap one or more command regions CR on the display region DR, and may execute a command operation assigned to a command region CR for a command execution object CEO moved to the command region CR. As such, the computer-readable medium 200 including the program 200 may provide a user with a simple, convenient user interface that may be applied across a number of electronic devices including respective touchscreens 120.

According to exemplary embodiments, the features, functions, processes, etc., described herein may be implemented via software, hardware (e.g., general processor, digital signal processing (DSP) chip, an application specific integrated circuit (ASIC), field programmable gate arrays (FPGAs), etc.), firmware, or a combination thereof. In this manner, the electronic device 100 and/or one or more components thereof may include or otherwise be associated with one or more memories including code (e.g., instructions) configured to cause the electronic device 100 and/or one or more components thereof to perform one or more of the features, functions, processes, etc., described herein. The memories may be any medium that participates in providing code/instructions to the one or more software, hardware, and/or firmware components for execution. Such memories may take many forms, including but not limited to non-volatile media, volatile media, and transmission media.

It is clear for a person skilled in the art that the disclosed embodiments can also be combined where possible.

## Claims

1. An electronic device (100), comprising:
a processor (140) configured to execute an application program; and
a touchscreen (120) configured to display, in response to a first user input, a display region (DR) corresponding to the application program being executed and a command region (CR) transparently overlapped on a portion of the display region (DR), the display region (DR) comprising a command execution object (CEO),
wherein the processor (146) is further configured to execute a command operation assigned to the command region (CR) for the command execution object (CEO) in response to a second user input moving the command execution object (CEO) to the command region (CR).

2. The electronic device of claim 1, wherein the first user input corresponds to a point-and-drag operation.

3. The electronic device of claim 1, wherein the first user input corresponds to a camera-captured user gesture.

4. The electronic device of claim 1, wherein the first user input corresponds to a physical manipulation of the electronic device.

5. The electronic device of claim 1, wherein the first user input corresponds to an interaction with a command button.

6. The electronic device of one of claims 1 to 5, wherein the second user input corresponds to a drag-and-drop operation.

7. The electronic device of one of claims 1 to 6, wherein the processor (140) is further configured to change the command operation assigned to the command region (CR) based on the number of times the command region (CR) is used.

8. The electronic device of one of claims 1 to 7, wherein the processor (140) is further configured to:
increase an area of the command region (CR) when the number of times the command region (CR) is used is greater than a first threshold value; and
decrease an area of the command region (CR) when the number of times the command region (CR) is used is smaller than a second threshold value; wherein the second threshold value is smaller than the first threshold value.

9. The electronic device of one of claims 1 to 8, wherein:
the application program corresponds to a setting-change application program;
the command execution object (CEO) corresponds to a setting-change object of the setting-change application program; and
setting information is assigned to the command region (CR).

10. The electronic device of one of claims 1 to 8, wherein:
the application program corresponds to a message-sending application program;
the command execution object (CEO) corresponds to a message; and
an addressee for the message is assigned to the command region (CR).

11. A method of operating of the electronic device of claim 1, comprising:
executing an application program on a display region (DR) (S120);
overlapping a plurality of command regions (CR) on the display region (DR) in response to a first user input (S 140);
moving a command execution object (CEO) into a command region (CR) in response to a second user input (S160); and
performing a command operation assigned to the command region (CR) for the command execution object (CEO) (S180).

12. The method of claim 11, wherein the first user input corresponds to a point-and-drag operation, a camera-captured user gesture, or a physical manipulation of the electronic device.

13. The method of claim 11 or 12, wherein the second user input corresponds to a drag-and-drop operation.

14. The method of one of claims 11 to 13, comprising:
calculating the number of times the command region (CR) is used (S220); and
changing a command operation assigned to the command region (CR) when the number of times is smaller than a threshold value (S260).

15. The method of one of claims 11 to 14, comprising:
calculating the number of times the command region (CR) is used (S310);
increasing an area of the command region (CR) when the number of times the command region (CR) is used is greater than a first threshold value (S350); and
decreasing an area of the command region (CR) when the number of times the command region (CR) is used is smaller than a second threshold value (S330),
wherein the second threshold value is smaller than the first threshold value.
